# EUROPÄISCHE PATENTANMELDUNG

(11) **EP 1 059 026 A2**
(43) Veröffentlichungstag der Anmeldung: **13.12.2000**
(21) Anmeldenummer: 00110924.8
(22) Anmeldetag: 25.05.2000
(51) Int. Cl.: A01G 5/04

(54) **Urnengesteckhalter**

(30) Priorität: 29.05.1999 DE 19924817
(71) Anmelder: TU ES! Handels GmbH, 25482 Appen (DE)
(72) Erfinder: Schröttke, Michael, 25482 Appen (DE)
(74) Vertreter: Thomas, Götz

(57) **Zusammenfassung**

Die Erfindung betrifft eine Vorrichtung (2) zur Befestigung von Blumensteckmassekörpern (8) auf unterschiedlich geformten Unterlagen (6). Die Erfindung betrifft weiter einen Urnengesteckhalter (4), der eine solche Befestigungsvorrichtung (2) und einen Blumensteckmassekörper (8) umfasst. Um eine Anbringung der Befestigungsvorrichtung (2) bzw. des Urnengesteckhalters (4) auf Urnen zu ermöglichen, deren Deckel (6) eine gewölbte, konische, ebene oder mit überstehendem Zierrat versehene Oberseite aufweist, wird erfindungsgemäß vorgeschlagen, dass die Befestigungsvorrichtung (2) einen Fuß (20) zum Aufsetzen auf die Unterlage aufweist, der mit mindestens einem nach oben über seine Oberseite überstehenden Dorn (22) zum Einstechen in die Unterseite des Blumensteckmassekörpers (8) sowie mehreren schwenkbar oder klappbar angebrachten Klebelaschen (24) versehen ist, und der ringförmig ausgebildet ist und eine vom aufgesetzten Blumensteckmassekörper (8) überdeckte mittige Öffnung (28) umschließt.

## Beschreibung

Die Erfindung betrifft eine Vorrichtung zur Befestigung eines Blumensteckmassekörpers auf unterschiedlich geformten Unterlagen. Die Erfindung betrifft weiter einen Urnengesteckhalter, umfassend einen Blumensteckmassekörper und eine solche Befestigungsvorrichtung.

Vorrichtungen zur Befestigung eines Blumensteckmassekörpers auf einer ebenen Unterlage, die unter der Bezeichnung Pinholder im Fachhandel erhältlich sind, werden von Floristen oder in der Trauerbinderei benutzt, um Körper aus Blumensteckmasse, wie Trocken- oder Naßschaum, mit und ohne Blumenschmuck auf einer Unterlage zu befestigen. Die Blumensteckmassekörper dienen dabei als Halterung für die Blumen, die mit ihren Stielen in die Steckmasse gestochen werden.

Die im Handel erhältlichen Pinholder bestehen im Wesentlichen aus einem flachen scheibenförmigen Fuß und einem nach oben überstehenden Dorn. Der Fuß ist auf seiner ebenen Unterseite mit einem Kleber beschichtet und wird auf die Unterlage geklebt, während der nach oben überstehende Dorn von unten her in den Blumensteckmassekörper gestochen wird, um diesen auf dem Pinholder und damit auf der Unterlage festzuhalten. Wenn der Blumensteckmassekörper bereits vor seiner Anbringung auf der Unterlage mit dem Blumenschmuck versehen wird, wie es häufig der Fall ist, kann durch das einfache Aufsetzen der Steckmasse auf den Dorn des Pinholders eine Beschädigung des Blumenschmucks verhindert und dieser Arbeitsvorgang gegenüber anderen Befestigungsverfahren erheblich erleichtert werden. Ein derartiger Pinholder ist zum Beispiel in der DE 297 14 173 U1 der Anmelderin beschrieben, wo er zur Befestigung einer Sargauflage auf dem Deckel eines Sarges dient.

Blumengesteckhalter müssen jedoch nicht nur auf Tischen oder Särgen mit einer ebenen horizontalen Oberseite befestigt werden, sondern zum Beispiel auch auf Urnen, die ebenfalls häufig mit Blumenschmuck versehen werden sollen, deren Deckel jedoch zumeist keine ebene horizontale Oberseite aufweisen. Eine Vielzahl von handelsüblichen Urnen besitzt nämlich kugelig oder eiförmig gewölbte, konische oder kegelstumpfförmige Deckel, deren Krümmungsradien, Kegelwinkel, Basisdurchmesser oder andere Abmessungen je nach Urnentyp oder Hersteller variieren. Zudem gibt es Urnen, bei denen auch noch kleine Kugeln oder andere Figuren über die Oberseite des Urnendeckels überstehen.

Auf derartigen Oberflächen lassen sich die bekannten Pinholder entweder gar nicht oder nicht ausreichender stabil befestigen, um das nicht unerhebliche Gewicht eines Blumengestecks und der mit Wasser getränkten Steckschaummasse sicher zu halten, zumal diese Oberflächen auch noch uneben sein können, wenn sie zum Beispiel wie bei vielen Urnen genarbt oder geriffelt sind. Neben den genannten Schwierigkeiten im Hinblick auf eine stabile Befestigung eines Gesteckhalters bieten gewölbte, konische oder mit überstehendem Zierrat versehene Oberflächen auch Schwierigkeiten im Hinblick auf eine richtige Ausrichtung des Gesteckhalters auf der Urne, bei der ihre Mittelachsen möglichst gut miteinander fluchten, um eine sichtbare Schieflage des Blumenschmucks zu vermeiden.

In der DE 298 11 232 U1 ist bereits eine zur Befestigung von Blumen auf Graburnen dienende Dekorationsvorrichtung offenbart, bei der ein zylindrischer Blumensteckmassekörper auf einen runden Fuß aufgeklebt ist, welcher sich nach dem Aufsetzen auf eine Urne mittels herabhängender Klebelaschen an dieser befestigen lässt. Bei der bekannten Dekorationsvorrichtung besteht der Fuß aus zwei schalenartigen Teilen mit einem kegelstumpfförmigem Querschnitt, zwischen denen die Klebelaschen befestigt sind. Auf der ebenen runden Oberseite des oberen Teils ist die Blumensteckmasse aufgeklebt, während der untere Teil mit seiner ebenen Unterseite auf der ebenen Oberseite einer Urne aufliegt. Eine derartige Dekorationsvorrichtung eignet sich jedoch zum einen nicht zur Befestigung auf gewölbten oder konischen Urnendeckeln, da der Fuß nur in seiner Mitte auf dein Deckel aufliegt, wodurch eine mit der Mittelachse der Urne fluchtende Anbringung erschwert und eine ausreichende Lagestabilität nicht gewährleistet ist. Wenn die bekannte Dekorationsvorrichtung bereits mit Blumenschmuck versehen ist, erfordert ihre Anbringung zudem einen nicht unerheblichen Zeit- und Arbeitaufwand, da ständig darauf geachtet werden muss, den Blumenschmuck beim Festkleben der Laschen nicht zu beschädigen und gleichzeitig die Vorrichtung auf der Urne gerade auszurichten.

In dem Prospekt "F.E.S. Concept 97/1" der F.E.S. Fleurop-Einkaufsservice GmbH in Hamm ist weiter ein Urnengesteckhalter dargestellt, der zur Befestigung von Blumenschmuck auf einem Urnendeckel dient. Dieser Urnengesteckhalter besteht aus einem zylindrischen Blumensteckmassekörper, der von einer flachen Schale mit ebenem Boden getragen wird. Die Schale wird mit Klebeband auf dem Urnendeckel befestigt. Wegen des ebenen Bodens der Schale eignet sich auch dieser Gesteckhalter nicht für eine Befestigung auf einem gewölbten oder konischen Urnendeckel.

Ausgehend hiervon liegt der Erfindung die Aufgabe zugrunde, eine Befestigungsvorrichtung und einen Urnengesteckhalter der eingangs genannten Art dahingehend zu verbessern, dass sie zur Anbringung auf gewölbten oder konischen Oberflächen, auf ebenen Oberflächen oder auf Oberflächen mit überstehendem Zierrat geeignet sind und dass eine schnelle, einfache und lösbare Anbringung eines bereits mit Blumenschmuck versehenen Blumensteckmassekörpers auf der Vorrichtung ermöglicht wird.

Diese Aufgabe wird erfindungsgemäß durch die im Patentanspruch 1 angegebene Merkmalskombination gelöst.

Durch die ringförmige Ausbildung des Fußes mit einer mittigen Öffnung kann dieser sicher und stabil auf nahezu sämtlichen handelsüblichen Urnen befestigt werden. Auf Urnen mit einer ebenen Deckeloberseite oder auf anderen ebenen Oberflächen erfolgt die Anbringung wie bei bekannten Urnengesteckhaltern, indem der Fuß mit seiner vorzugsweise ebenen Unterseite auf der ebenen Oberfläche abgesetzt und dann mit Hilfe der Klebelaschen befestigt wird. Bei der Anbringung auf einem gewölbten oder konischen Urnendeckel oder einer anderen Unterlage mit einer gewölbten oder konischen Oberfläche kann sich demgegenüber deren Scheitel oder Spitze durch die mittige Öffnung des Fußes hindurch bewegen, bis der Rand der Öffnung auf der gewölbten oder konischen Deckeloberfläche aufliegt. Entsprechendes gilt für überstehenden Zierrat an der Deckelspitze. Infolge der Verjüngung gewölbter oder konischer Oberflächen kommt es unabhängig von Krümmungsradius, Kegelwinkel, Basisdurchmesser oder anderen Abmessungen der Oberfläche früher oder später zur Anlage des Randes der Öffnung gegen die Urne und damit zu einem Kontakt zwischen dem Fuß und der Urne oder dem Urnendeckel entlang einer ringförmigen Berührungslinie, die einen stabilen und sicheren Sitz der Vorrichtung auf der Urne bzw. dem Deckel sicherstellt. Der durch die Öffnung hindurch nach oben überstehende Teil der Urne oder des Urnendeckels stellt dabei keinerlei Problem für die Befestigung oder Ausrichtung dar, da die Blumensteckschaummasse sehr leicht nachgibt und ein Eindringen des Urnendeckels gestattet. Im Gegenteil sorgt die eingedrückte Blumensteckmasse für eine Vergrößerung der Auflagefläche und damit für einen besseren Sitz der Vorrichtung. Nach dem Aufsetzen auf die Oberfläche kann der Fuß mit Hilfe der Klebelaschen befestigt werden, die infolge ihrer Schwenkbarkeit so ausgerichtet werden können, dass sie flächig gegen einen zum Fuß benachbarten Bereich der gewölbten oder konischen Oberfläche anliegen.

Im Vergleich zu den bekannten Urnengesteckhaltern gestattet es die mittige Öffnung im Fuß darüber hinaus, die Ausgangspunkte der Klebelaschen näher an die Oberfläche der Urne oder des Deckels heranzuführen und damit die Länge der Klebelaschen zu verkürzen, so dass diese mit geringerem Aufwand durch den Blumenschmuck verdeckt werden können. Entsprechendes gilt für einen in dekorativer Hinsicht unschönen großen ringförmigen Hohlraum, der beim Anbringen der bekannten Urnengesteckhalter auf einem gewölbten Urnendeckel zwischen der Unterseite des Gesteckhalters und dem Urnendeckel gebildet wird. Mit Hilfe der überstehenden Dorne kann der Blumensteckmassekörper schnell, einfach und lösbar in der richtigen Ausrichtung auf dem Fuß angebracht werden, selbst wenn er bereits mit dem Blumenschmuck versehen ist. Außerdem kann die Blumensteckmasse leicht ausgetauscht werden, zum Beispiel wenn sie beim Anbringen des Blumenschmucks beschädigt wird.

Da die meisten Urnen oder Urnendeckel eine rotationssymmetrisch Oberfläche aufweisen, wird die mittige Öffnung gemäß einer bevorzugten Ausgestaltung der Erfindung um den ganzen Fuß herum oder mindestens entlang einiger Sektoren des Fußes von einem kreisbogenförmigen inneren Anlagerand begrenzt, so dass dieser auf allen Seiten gleichmäßig gegen die gewölbte oder konische Oberfläche der Urne anliegt und zudem eine Zentrierung der Befestigungsvorrichtung auf dem Deckel bewirkt.

Beim Auflegen auf eine rotationssymmetrische gewölbte oder konische Oberfläche liegt ein solcher Fuß entlang seines ganzen Umfangs oder an mehreren Stellen entlang der mit dem Anlagerand versehenen Sektoren gegen die gewölbte oder konische Oberfläche an und sorgt durch die relativ weit auseinander liegenden und vorzugsweise gleichmäßig um die Mitte des Fußes und der Oberfläche herum verteilten Auflagepunkte für eine sehr stabile Abstützung. Anschließend kann der Fuß mit den Klebelaschen auf der Oberfläche fixiert werden, wobei deren Beweglichkeit ein Verschwenken bis in die Nähe der Oberfläche gestattet. Dadurch können die Berührungsflächen zwischen den gewölbten Seiten der Oberfläche und einer auf der Unterseite der Klebelaschen aufgebrachten Kleberschicht vergrößert werden.

Eine weitere bevorzugte Ausgestaltung der Erfindung sieht vor, dass mindestens zwei Dorne über die Oberseite des Fußes überstehen, deren Längsachsen vorzugsweise parallel ausgerichtet sind, um das Eindringen in die Blumensteckmasse zu erleichtern, und die zweckmäßig in gleichen Winkelabständen angeordnet sind, um die beim Einstechen der Blumenstiele auf die Blumensteckmasse ausgeübten seitlichen Kräfte gleichmäßiger in den Fuß abzuleiten.

Gemäß einer weiteren vorteilhaften Ausgestaltung der Erfindung wird die gesamte Befestigungsvorrichtung, d.h. der Fuß, der mindestens eine Dorn und die Klebelaschen durch Spritzgießen aus einem biologisch abbaubaren Kunststoff hergestellt, wie beispielsweise Polycellulose, so dass er nach einigen Jahren im Boden ebenso wie die bevorzugt aus Phenolschaum hergestellte Blumensteckmasse und ggf. ein zur Verstärkung dienendes Drahtgitter im Wesentlichen rückstandsfrei verrottet ist.

Die Klebelaschen können zweckmäßig entweder radial nach außen oder innen über einen Umfangsrand des Fußes überstehen oder von Sektoren des ringförmigen Fußes gebildet werden. Die Verschwenkbarkeit der Klebelaschen kann entweder durch Filmscharniere zwischen dem Fuß und den überstehenden Klebelaschen gewährleistet werden, deren Schwenkachsen jeweils zu einem Radiusvektor der mittigen Öffnung senkrecht sind, oder durch dünne tordierbare Materialbrücken, welche als Klebelaschen ausgebildete Sektoren des ringförmigen Fußes mit benachbarten, als Dornträger ausgebildeten Sektoren verbinden.

Alternativ können die Klebelaschen auch als Klebebandstreifen ausgebildet sein, deren eines Ende auf dem Fuß befestigt ist und deren anderes Ende nach innen oder außen übersteht.

Die Klebelaschen sind vorzugsweise auf ihrer Unterseite mit einem Kleber beschichtet, der eine gewisse Mindeststärke aufweist und plastisch oder elastisch verformbar ist, so dass trotz unterschiedlich geformter Klebeflächen, d.h. einer ebenen Unterseite der Klebelaschen und einer gewölbten Oberfläche eines Urnendeckels eine gute Haftung sichergestellt werden kann, selbst dann, wenn die letztere zusätzlich mit einer Narbung, Riffelung oder einem anderen Oberflächenprofil versehen ist.

Um eine Verschmutzung des Klebers und ein ungewolltes Festkleben der Klebelaschen zu verhindern, ist die von der Klebelasche abgewandte Oberfläche des Klebers mit einer abziehbaren Schutzfolie versehen, die sich ggf. einstückig über die Unterseite sämtlicher Klebelaschen erstrecken kann, um das Anbringen und Abziehen zu erleichtern.

Im folgenden wird die Erfindung anhand einiger in der Zeichnung dargestellter Ausführungsbeispiele näher erläutert. Es zeigen:
Fig. 1: eine Draufsicht von oben auf eine erfindungsgemäße Vorrichtung zur Befestigung eines Blumensteckschaumkörpers auf dem Deckel einer Urne;
Fig. 2: eine Seitenansicht der Befestigungsvorrichtung aus Fig. 1;
Fig. 3: eine Querschnittsansicht der Befestigungsvorrichtung aus Fig. 1 entlang der Linie III-III;
Fig. 4: eine Draufsicht von oben auf eine andere erfindungsgemäße Befestigungsvorrichtung;
Fig. 5: eine Draufsicht von oben auf eine noch weitere erfindungsgemäße Befestigungsvorrichtung;
Fig. 6: eine Seitenansicht einer Urne, der auf ihrem Deckel angebrachten Befestigungsvorrichtung aus Fig. 1 sowie eines Blumensteckschaumkörpers vor dem Aufstecken auf die Befestigungsvorrichtung;
Fig. 7: eine teilweise geschnittene Seitenansicht einer Urne, der auf ihrem Deckel angebrachten Befestigungsvorrichtung aus Fig. 4, sowie eines darauf aufgesteckten Steckschaumkörpers;
Fig. 8: eine teilweise geschnittene Seitenansicht einer anderen Urne mit einer darauf angebrachten weiteren erfindungsgemäßen Befestigungsvorrichtung und einem Steckschaumkörper;
Fig. 9: eine Draufsicht auf die Befestigungsvorrichtung aus Fig. 8.

Die in der Zeichnung dargestellten Befestigungsvorrichtungen 2 bilden jeweils einen Teil eines Urnengesteckhalters 4, der auf der Oberseite eines Urnendeckels 6 befestigt und anschließend mit Blumen (nicht dargestellt) geschmückt wird. Der Urnengesteckhalter 4 besteht aus einem im Wesentlichen zylindrisch geformten Körper 8 aus Blumensteckschaum, einem um die Umfangsfläche des Steckschaumkörpers 8 herumgelegten Drahtgitter 10 und einer der Befestigungsvorrichtungen 2, die zur Befestigung des Steckschaumkörpers 8 auf dem Urnendeckel 6 dient.

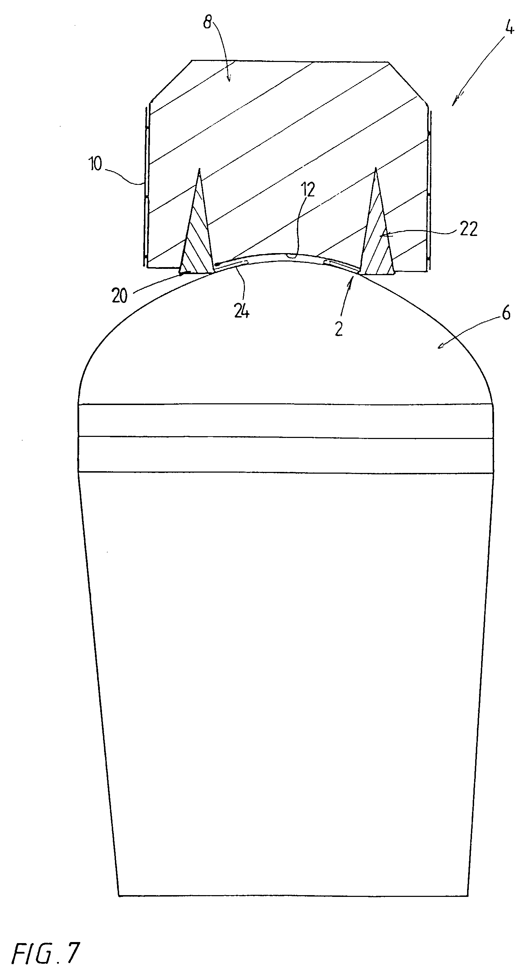

Der im Wesentlichen zylindrische Steckschaumkörper 8 besteht aus einem offenzelligen, feinporigen, spröd-harten Schaumstoffmaterial, vorzugsweise einem biologisch abbaubaren Phenolschaum, mit einem verhältnismäßig geringen Verformungswiderstand, das in Stangen-, Ziegel- oder Blockform im Handel erhältlich ist. Aufgrund der Sprödigkeit und einer geringen Porenwandstärke des Schaumstoffmaterials gibt dieses leicht nach, wenn ein harter dünner Gegenstand, wie beispielsweise ein mit Blumenbindedraht umwickelter Blumenstiel, in das Schaumstoffmaterial gestochen wird. Der Steckschaumkörper 8 kann auf seiner Unterseite mit einer konkaven Einbuchtung 12 versehen sein und ggf. am oberen Ende gewölbt oder kegelstumpfförmig geformt sein, wie in Fig. 7 dargestellt.

Das um den Steckschaumkörper 8 herumgelegte Drahtgitter 10 dient dazu, dem Steckschaumkörper 8 eine größere Festigkeit zu verleihen und sein Auseinanderbrechen beim Einstechen der Blumenstiele oder infolge des Gewichts des Blumenschmucks zu verhindern. Es besteht aus einer Mehrzahl von dünnen unbeschichteten Eisendrähten 14, die sich im rechten Winkel kreuzen, an den Kreuzungsstellen miteinander verschweißt sind und quadratische Maschen umschließen und ist überall im Floristenfachhandel erhältlich.

Die Befestigungsvorrichtungen 2 bestehen im Wesentlichen aus einem flachen Auflagefuß 20 mit einer ebenen Ober- und Unterseite, der mit mehreren starren, nach oben über die Oberseite überstehenden Haltedornen 22 zum Einstechen in die Unterseite des Steckschaumkörpers 8 sowie mit mehreren schwenkbaren oder klappbaren Klebelaschen 24 versehen ist, die auf ihrer dem Urnendeckel 6 zugewandten Unterseite mit einem Kleber 26 beschichtet sind, so dass sie sich auf dem Urnendeckel 6 festkleben lassen.

Die Befestigungsvorrichtungen 2, d.h. der Auflagefuß 20, die Haltedorne 22 und die Klebelaschen 24 ohne den Kleber 26 werden vorzugsweise einstückig durch Spritzgießen aus Polycellulose hergestellt, so dass sie im Boden biologisch abbaubar sind.

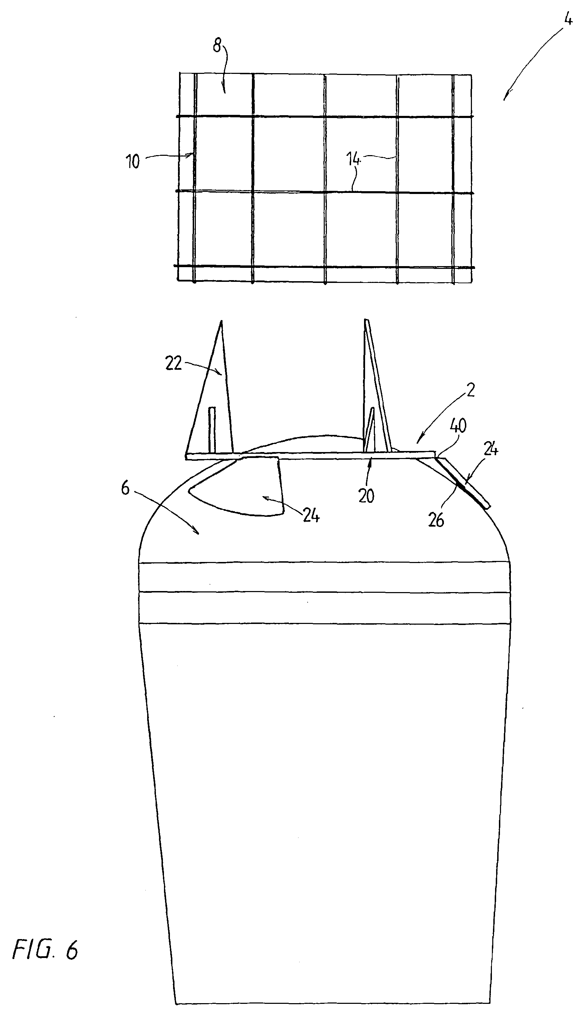

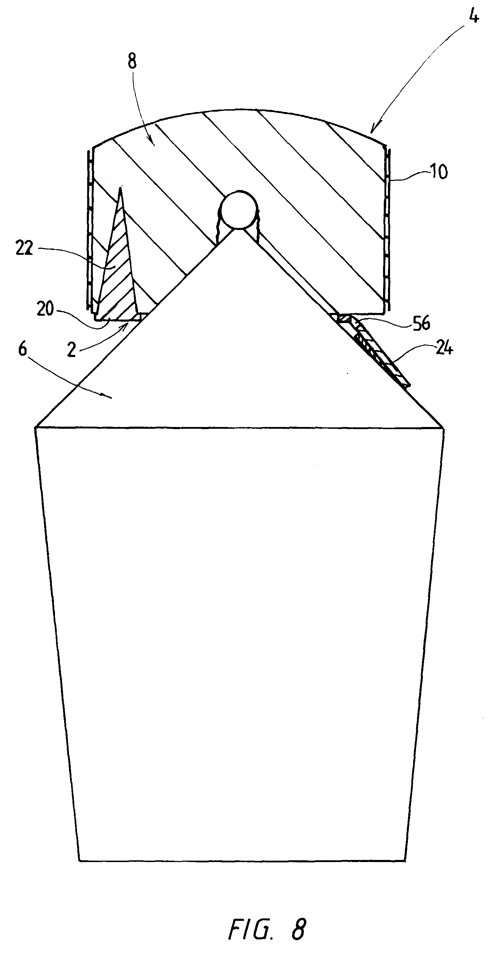

Um eine sichere und stabile Anbringung des Urnengesteckhalters 4 auf einem konvex gewölbten (Fig. 6 und 7) oder konischen (Fig. 8) Urnendeckel 6 zu ermöglichen, ist der Auflagefuß 20 erfindungsgemäß ringförmig ausgebildet und umschließt eine mittige Öffnung 28, die mindestens entlang von einigen Sektoren ihres äußeren Umfangs von einem an den runden Querschnitt des Urnendeckels 6 angepassten kreisbogenförmigen Anlagerand 30 begrenzt wird, dessen Abstand von der Mitte der Öffnung 28 kleiner ist als derjenige anderer, starr mit den Haltedornen 22 verbundener Abschnitte des inneren Umfangsrandes des Auflagefußes 20. Nach dem Aufsetzen des Urnengesteckhalters 4 auf den Urnendeckel 6 liegt dieser Anlagerand 30 entlang einer kreisförmigen Linie gegen die Deckeloberseite an, während der ringförmige Auflagefuß 20 horizontal nach außen übersteht, wie am besten in den Figuren 6 bis 8 dargestellt.

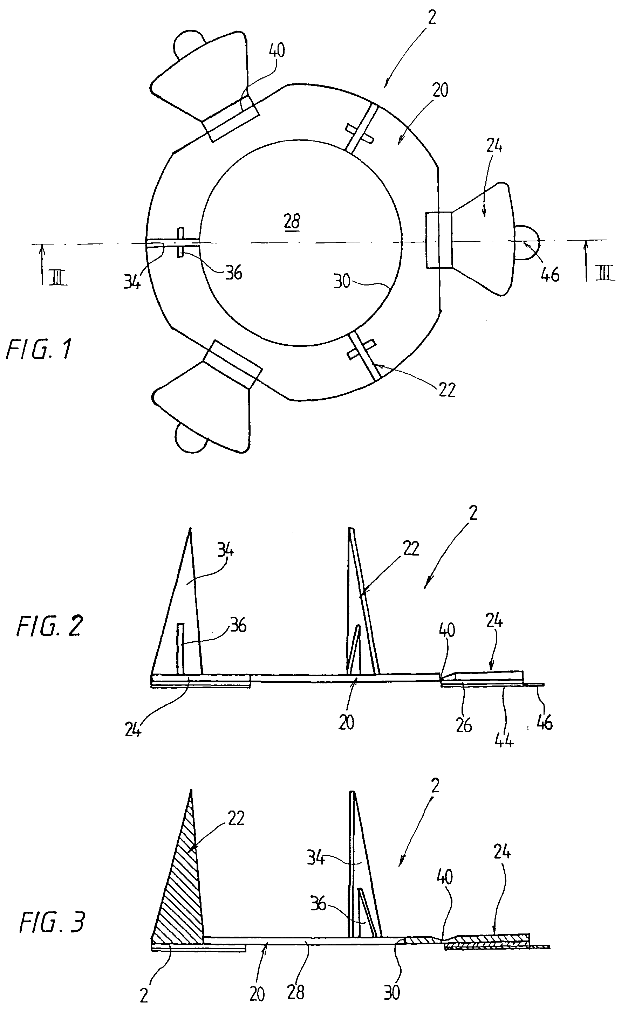

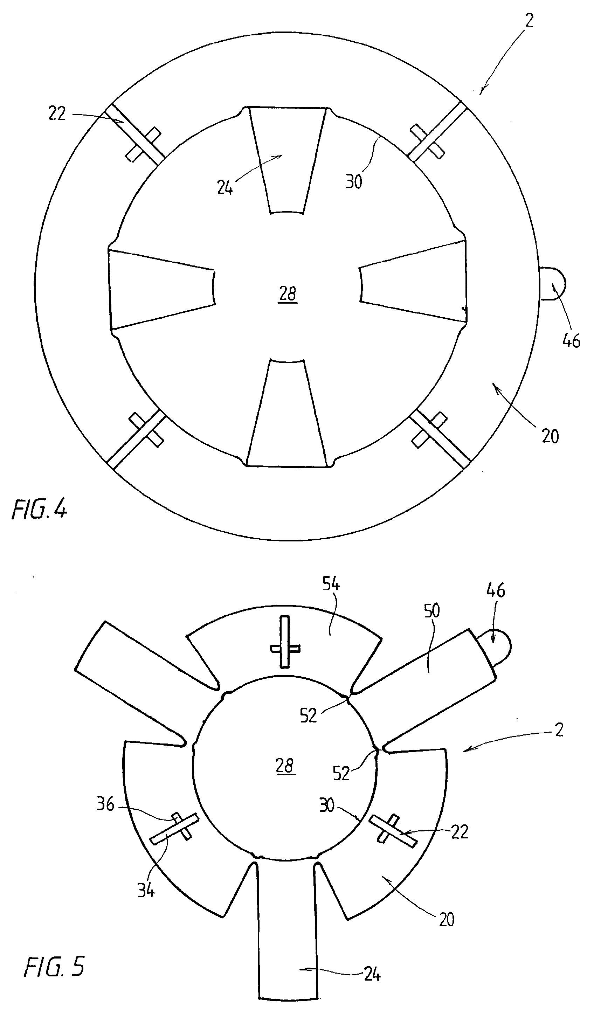

Die zur Befestigung des Steckschaumkörpers 8 auf dem Auflagefuß 20 dienenden Haltedorne 22 sind in regelmäßigen Winkelabständen voneinander angeordnet. Bevorzugt sind drei (Fig. 1) oder vier (Fig. 4) Haltedorne 22 mit parallelen Längsachsen jeweils in Winkelabständen von 120 Grad bzw. 90 Grad vorgesehen. Bei den in der Zeichnung dargestellten Befestigungsvorrichtungen 2 bestehen die Haltedorne 22 jeweils aus einem senkrecht nach oben überstehend an der Oberseite des ringförmigen Auflagefußes 20 angeformten radial ausgerichteten flachen Mittelteil 34 in Form eines spitzwinkligen Dreiecks, dessen kürzeste Seite dem Auflagefuß 20 zugewandt ist, sowie zwei im rechten Winkel über entgegengesetzte Breitseitenflächen des Mittelteils 34 überstehenden stabilisierenden flachen dreieckigen Seitenteilen 36, die einstückig mit dem Auflagefuß 20 und dem Mittelteil 34 verbunden sind und sich nach oben zu einer mit der Breitseitenfläche des Mittelteils 34 verschmelzenden Spitze verjüngen. Die Oberseite des Auflagefußes 20 zwischen den Haltedornen 22 bildet einen Anschlag, der die Eindringtiefe der Haltedorne 22 in den Steckschaumkörper 8 begrenzt.

Die Klebelaschen 24 können entweder radial nach außen (Figuren 1 bis 3, 6 und 9) oder nach innen (Figuren 4 und 7) überstehend am ringförmigen Auflagefuß 20 angeformt sein, oder sie können einen Sektor desselben bilden (Fig. 5).

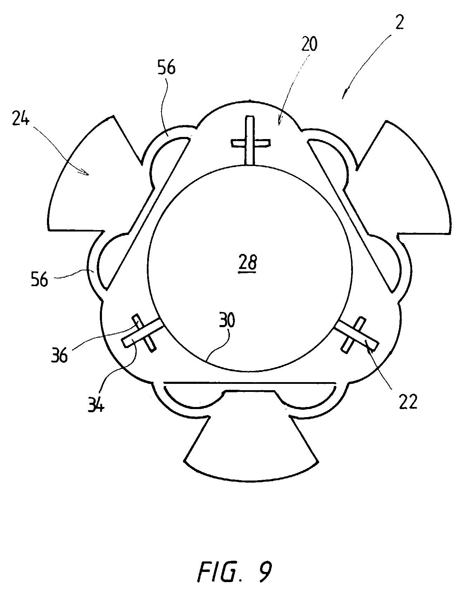

Bei den in den Figuren 1 bis 3 und 6 dargestellten Befestigungsvorrichtungen 2 sind drei in der Mitte zwischen benachbarten Haltedornen 22 angeordnete, in Winkelabständen von 120 Grad nach außen überstehende Klebelaschen 24 vorgesehen die jeweils durch ein Filmscharnier 40 schwenkbar mit dem äußeren Umfangsrand des Auflagefußes 20 verbunden sind. Die Schwenkachsen der Filmscharniere 40 sind dabei jeweils senkrecht zu einem Radiusvektor der vom Auflagefuß 20 umschlossenen kreisförmigen mittigen Öffnung 28 ausgerichtet und liegen in der Ebene der Unterseite des Auflagefußes 20. Bei der Befestigungsvorrichtung 2 der Fig. 9 sind an Stelle der Filmscharniere 40 zwischen den Klebelaschen 24 und dem äußeren Umfangsrand des Auflagefußes 20 jeweils zwei dünne tordierbare Materialbrücken 56 angeordnet, welche die beiden Seiten jeder Klebelasche 24 mit dem Auflagefuß 20 verbinden. Die symmetrisch zur Mittelachse der Klebelaschen 24 angeordneten bogenförmigen Materialbrücken 56 weisen einen runden oder quadratischen Querschnitt auf und münden im Wesentlichen in Umfangsrichtung in das dem Auflagefuß 20 zugewandte Ende der Klebelaschen 24 bzw. in der Nähe der Haltedorne 22 in den Auflagefuß 20 ein. Zwischen den beiden bogenförmigen Materialbrücken 56 sind die Klebelaschen 24 vom Auflagefuß 20 getrennt, so dass die Klebelaschen 24 nahezu um 360 Grad um die von den Materialbrücken 56 gebildete Schwenkachse verschwenkbar sind.

Um den Abstand der Klebelaschen 24 vom Anlagerand 30 zu minimieren und um gleichzeitig Material einzusparen, ist der Auflagefuß 20 im Bereich der Klebelaschen 24 schmaler ausgebildet.

Die radial nach außen zu breiter werdenden Klebelaschen 24 sind nahezu auf ihrer gesamten Unterseite mit dem Kleber 26 beschichtet, der eine verhältnismäßig große Dicke von 1 bis 2 mm aufweist und plastisch oder elastisch verformbar ist, um die Haftfläche auf unebenen oder in Bezug zur Unterseite der Klebelaschen 24 geneigten Oberflächen zu vergrößern. Der Kleber 26 trägt auf seiner Unterseite eine abziehbare Schutzfolie 44, deren Form im Wesentlichen der Form der Klebelasche 24 entspricht. Die Schutzfolie 44 ist mit einer nach außen überstehenden Grifflasche 46 versehen, um ihr Ergreifen und Abziehen zu erleichtern.

Mit dieser Befestigungsvorrichtung 2 lässt sich der aus einem Steckschaumkörper 8, ggf. einem Drahtgitter 10, sowie der Befestigungsvorrichtung 2 vormontierte Urnengesteckhalter 4 mit exakt vertikal ausgerichteten Haltedornen 22 auf der gewölbten Oberseite eines Urnendeckels 6 anbringen, weil die Klebelaschen 24 nach dem Aufsetzen des vormontierten Urnengesteckhalters 4 auf den Urnendeckel 6 noch von außen her zugänglich sind, so dass sie nach dem Ausrichten des Gesteckhalters 4 gegen den Deckel 6 angedrückt werden können.

Im Unterschied dazu sind die Klebelaschen 24 bei der in Fig. 3 dargestellten Befestigungsvorrichtung 2 nach innen über den kreisförmigen Anlagerand 30 überstehend angeformt und ebenfalls durch Filmscharniere 40 mit dem starren ringförmigen Auflagefuß 20 verbunden, so dass sie sich beim Aufsetzen des Auflagefußes 20 auf einen konvex gewölbten Urnendeckel 6 von selbst nach oben biegen und mit ihrer Unterseite innerhalb der vom Anlagerand 30 umschlossenen mittigen Öffnung 28 gegen den Urnendeckel 6 anlegen. Dadurch kann die Befestigung vereinfacht und außerdem die Klebelaschen 24 besser in eine nahezu parallele Ausrichtung mit der Deckeloberfläche gebracht werden. Weiter sind bei dieser Befestigungsvorrichtung 2 alle vier, in Winkelabständen von 90 Grad nach innen überstehenden und bezüglich der Haltedorne 22 um 45 Grad versetzten Klebelaschen 24 auf ihrer Unterseite mit einer einzigen Schutzfolie 44 überzogen, die sich somit nicht nur über die mit Kleber 26 beschichteten Bereiche auf der Unterseite der Klebelaschen 24 sondern um den ganzen Umfang des Auflagefußes 20 herum erstreckt, um das Abziehen zu erleichtern.

Bei der in Fig. 5 dargestellten Befestigungsvorrichtung 2 mit drei als schwenk- oder klappbare Sektoren 50 des Auflagefußes 20 ausgebildeten Klebelaschen 24 sind diese Klebelaschen 24 jeweils durch zwei dünne Materialbrücken 52 mit benachbarten, die Haltedorne 22 tragenden Sektoren 54 verbunden, so dass sich die Klebelaschen 24 jeweils unter Torsion der Materialbrücken 52 um eine durch diese hindurch verlaufende Achse in Bezug zu den benachbarten Sektoren 54 verschwenken lassen, wobei die letzteren infolge der größeren Länge ihres gebogenen Anlagerandes 30 und durch die in den Steckschaumkörper 8 eingestochenen Haltedorne 22 gegen die Oberfläche anliegend festgehalten werden.

Um eine gute Anlage der Klebelaschen 24 gegen die gewölbte Deckeloberfläche zu erzielen, sind die Materialbrücken 52 in unmittelbarer Nähe des Anlagerandes 30 angeordnet. Außerdem stehen die Klebelaschen 24 weiter nach außen über, so dass sie sich unterhalb des Auflagefußes 20 gut gegen die Oberfläche des Deckels 6 andrücken lassen.

Beim Anbringen des vormontierten, ggf. bereits mit Blumenschmuck versehenen Urnengesteckhalters 4 auf dem gewölbten (Fig. 6 oder 7) oder im Wesentlichen konischen (Fig. 8) Urnendeckel 6 wird der Urnengesteckhalter 4 von oben auf den Deckel 6 aufgesetzt und etwas nach unten gedrückt, bis der Auflagefuß 20 entlang des ringförmigen Anlagerandes 30 gleichmäßig gegen den Deckel 6 anliegt. Die dabei mehr oder weniger weit durch die mittige Öffnung 28 dringende Spitze des Deckels 6 drückt sich ohne weiteres in die Unterseite des nachgiebigen Steckschaumkörpers 8 ein, wenn dieser nicht bereits zuvor an dieser Stelle mit einer Einbuchtung versehen worden ist. Anschließend werden die Schutzfolien 44 abgezogen und die Klebelaschen 24 gegen den Deckel 6 angedrückt. Falls gewünscht, kann der Steckschaumkörper 8 auch nachträglich, d.h. nach dem Anbringen des Auflagefußes 20 auf dem Urnendeckel 6 von oben auf die Haltedorne 22 gedrückt werden.

## Patentansprüche

1. Vorrichtung zur Befestigung eines Blumensteckmassekörpers (8) auf unterschiedlich geformten Unterlagen, insbesondere auf nach oben gewölbten, kegelstumpfförmigen, ebenen oder spitz zulaufenden Urnendeckeln (6), umfassend einen Fuß (20) zum Aufsetzen auf die Unterlage, der mit mindestens einem nach oben über seine Oberseite überstehenden Dorn (22) zum Einstechen in die Unterseite des Blumensteckmassekörpers (8) sowie mit mehreren schwenkbar oder klappbar angebrachten Klebelaschen (24) versehen ist, wobei der Fuß (20) ringförmig ausgebildet ist und eine vom Blumensteckmassekörper (8) überdeckte mittige Öffnung (28) umschließt.

2. Vorrichtung nach Anspruch 1, dadurch gekennzeichnet, dass mindestens zwei Dorne (22) mit parallelen Längsachsen vorgesehen sind.

3. Vorrichtung nach Anspruch 1 oder 2, dadurch gekennzeichnet, dass der Fuß (20), der mindestens eine Dorn (22) und die Klebelaschen (24) einstückig aus einem durch Spritzgießen formbaren Material ausgebildet sind.

4. Vorrichtung nach einem der Ansprüche 1 bis 3, dadurch gekennzeichnet, dass der Fuß (20), der mindestens eine Dorn (22) und die Klebelaschen (24) aus einem biologisch abbaubaren Material ausgebildet sind.

5. Vorrichtung nach einem der Ansprüche 1 bis 4, dadurch gekennzeichnet, dass die mittige Öffnung (28) mindestens entlang eines Teils des Fußes (20) von einem kreisbogenförmigen Anlagerand (30) begrenzt wird.

6. Vorrichtung nach einem der Ansprüche 1 bis 5, dadurch gekennzeichnet, dass mindestens ein Teil der Klebelaschen (24) radial nach außen oder innen über einen äußeren bzw. inneren Umfangsrand des Fußes (20) übersteht.

7. Vorrichtung nach einem der Ansprüche 1 bis 6, dadurch gekennzeichnet, dass der Fuß (20) im Bereich der Klebelaschen (24) eine geringere Breite aufweist.

8. Vorrichtung nach einem der Ansprüche 1 bis 7, dadurch gekennzeichnet, dass die Klebelaschen (24) durch Filmscharniere (40) oder durch tordierbare Materialbrücken (52, 54) mit dem Fuß (20) verbunden sind.

9. Vorrichtung nach einem der Ansprüche 1 bis 8, dadurch gekennzeichnet, dass Schwenkachsen der schwenkbaren oder klappbaren Klebelaschen (24) zu einem Radiusvektor der mittigen Öffnung (28) senkrecht sind.

10. Vorrichtung nach einem der Ansprüche 1 bis 9, dadurch gekennzeichnet, dass die Klebelaschen (24) durch Filmscharniere (40) oder durch tordierbare Materialbrücken (52, 54) mit dem Fuß (20) verbunden sind.

11. Vorrichtung nach einem der Ansprüche 1 bis 10, dadurch gekennzeichnet, dass die Klebelaschen (24) auf mindestens einer Seite in einer Dicke von mindestens 1 mm mit einem plastisch oder elastisch verformbaren Kleber (26) beschichtet sind.

12. Vorrichtung nach Anspruch 11, dadurch gekennzeichnet, dass der Kleber (26) auf seiner von der Klebelasche (24) abgewandten Seite mit einer abziehbaren Schutzfolie (44) versehen ist.

13. Urnengesteckhalter, umfassend eine Befestigungsvorrichtung nach einem der Ansprüche 1 bis 12 sowie einen durch Einstechen des mindestens einen Dorns (22) in seine Unterseite von der Befestigungsvorrichtung (2) gehaltenen Blumensteckmassekörper (8).

14. Urnengesteckhalter nach Anspruch 13, dadurch gekennzeichnet, dass der Blumensteckmassekörper (8) zumindest nach seiner Anbringung auf einer Unterlage (6) in seiner Unterseite eine Einbuchtung (12) aufweist, deren Form im Wesentlichen der Form eines durch die mittige Öffnung (28) dringenden Teils der Unterlage (6) entspricht.
